(19) **Europäisches Patentamt / European Patent Office / Office européen des brevets**

(11) **EP 4 470 689 B1**

(12) **FASCICULE DE BREVET EUROPEEN**

(45) Date de publication et mention de la délivrance du brevet:
**10.09.2025 Bulletin 2025/37**

(21) Numéro de dépôt: **24179221.7**

(22) Date de dépôt: **31.05.2024**

(51) Classification Internationale des Brevets (IPC):
**B21C 37/15** *(2006.01)*

(52) Classification Coopérative des Brevets (CPC):
**B21C 37/154; B21C 1/22;** B23K 31/027

(54) **PROCÉDÉ DE FABRICATION D'UN TUBE ÉCHANGEUR DE CHALEUR À DOUBLE PAROI**

VERFAHREN ZUR HERSTELLUNG EINES DOPPELWANDIGEN WÄRMETAUSCHERROHRES

METHOD FOR PRODUCING A DOUBLE-WALLED HEAT EXCHANGER TUBE

(84) Etats contractants désignés:
AL AT BE BG CH CY CZ DE DK EE ES FI FR GB GR HR HU IE IS IT LI LT LU LV MC ME MK MT NL NO PL PT RO RS SE SI SK SM TR

(30) Priorité: **02.06.2023 FR 2305571**

(43) Date de publication de la demande:
**04.12.2024 Bulletin 2024/49**

(73) Titulaire: **Commissariat à l'Energie Atomique et aux Energies Alternatives**
**75015 Paris (FR)**

(72) Inventeur: **SORNIN, Denis**
**91280 Saint Pierre du Perray (FR)**

(74) Mandataire: **Brevalex**
**Tour Trinity**
**1 B Place de la Défense**
**92400 Courbevoie (FR)**

(56) Documents cités:
EP-B1- 0 167 418          EP-B1- 0 695 598
EP-B1- 1 537 921          CN-A- 101 745 793
CN-B- 104 235 515         CN-B- 113 458 737
JP-A- H02 187 280         JP-A- S6 238 783
JP-B2- H0 677 855

## EP 4 470 689 B1

**Description**

**DOMAINE TECHNIQUE DE L'INVENTION**

La présente invention se rapporte à un procédé de fabrication d'un tube échangeur de chaleur à double paroi, ce tube à double paroi étant notamment destiné à équiper des dispositifs du type échangeurs de chaleur.

De tels échangeurs de chaleur trouvent notamment application dans l'industrie chimique ou dans le domaine de l'énergie.

**ÉTAT DE LA TECHNIQUE**

Les échangeurs de chaleur sont des dispositifs permettant de transférer de l'énergie thermique d'un premier fluide vers un second fluide, sans les mélanger.

Différents types d'échangeurs de chaleur à deux fluides existent parmi lesquels ceux qui sont équipés d'un tube à double paroi, également connu sous l'expression de "tube double-paroi", qui comprend deux tubes cylindriques (tubulaires) et coaxiaux enfilés l'un dans l'autre, la surface interne du tube de plus faible diamètre (tube interne) étant destinée à venir en contact avec l'un des fluides et la surface externe du tube de plus grand diamètre (tube externe) étant destinée à venir en contact avec l'autre fluide.

La structure particulière d'un tube échangeur de chaleur à double paroi présente l'avantage de conférer une sécurité renforcée à l'échangeur de chaleur qui en est équipé, dans la mesure où chaque tube assure, de manière redondante, une double fonction, à savoir une fonction d'étanchéité pour éviter que les deux fluides n'entrent en contact et une fonction de résistance à la pression exercée par la circulation de ces deux fluides.

Cette double fonction est particulièrement importante, par exemple dans les cas où l'échangeur de chaleur équipe des installations, comme des réacteurs chimiques, dans lesquelles il faut assurer, de manière sûre et efficace, l'échange de chaleur entre un premier fluide tel que des métaux ou sels métalliques fondus réactifs, par exemple à base de sodium, de lithium ou de potassium, et un second fluide tel que de l'eau. En effet, toute défaillance qui surviendrait au niveau d'un tube à double paroi équipant de telles installations engendrerait de graves conséquences sur l'exploitation en raison de la réactivité chimique du caloporteur avec le milieu à refroidir. Dans ce cas précis, les sollicitations en service, en sus de la pression statique des fluides et de la corrosion des surfaces, découlent des contraintes d'origine thermique et des sollicitations de fatigue imposées par les cycles de fonctionnement ou les vibrations induites par la thermo-hydraulique.

La plupart des tubes échangeurs de chaleur à double paroi envisagent de laisser un jeu mécanique, ou interstice, entre les tubes interne et externe.

En reliant cet interstice à un système de détection, il est ainsi possible de détecter la présence de fluide provenant du perçage de l'un des deux tubes avant que l'intégrité de l'autre tube ne soit altérée.

Toutefois, la présence de cet interstice est particulièrement pénalisante au regard des propriétés de conductivité thermique du tube échangeur de chaleur à double paroi et ne permet, en outre, pas de répondre de manière efficace à un hypothétique perçage simultané des deux tubes le constituant.

Pour améliorer la conductivité thermique des tubes échangeurs à double paroi, il a été proposé de combler au moins partiellement l'interstice existant entre les deux tubes.

Le document CN 203928838, référencé [1] dans la présente description, propose un procédé de fabrication d'un tube à double paroi qui comprend une étape consistant à combler l'interstice entre les tubes interne et externe d'un tel tube échangeur de chaleur à double paroi par une poudre métallique. En assurant une distribution radiale de la température, cette poudre métallique confère une bonne conductivité thermique au tube à double paroi et permet également d'atténuer les risques de dégradation liés aux brusques transitions thermiques.

Le document CN 113458737, référencé [2], propose un procédé de fabrication d'un tube à double paroi comprenant un tube externe, une couche intermédiaire et un tube interne, les tubes externe et interne ainsi que la couche intermédiaire étant métalliques, cylindriques et coaxiaux. Le procédé décrit dans le document [2] comprend les étapes successives suivantes :

(1) la mise en place du tube interne revêtu de la couche intermédiaire dans le tube externe, l'interstice entre les tubes interne et externe étant approprié ;
(2) le scellement et le soudage des tubes interne et externe à chacune de leurs extrémités ; et
(3) la mise en place des tubes ainsi soudés pour une étape de compression isostatique à chaud dans des conditions appropriées pour un soudage par diffusion.

Dans ce document [2], la couche intermédiaire, qui est en un matériau choisi parmi le cuivre, le nickel, le chrome et le vanadium, est réalisée par dépôt chimique ou électrolytique. Dans l'étape (1), l'interstice approprié entre les tubes interne et externe est compris entre 0,2 mm et 2 mm.

EP 4 470 689 B1

S'ils améliorent les propriétés de conductivité thermique des tubes à double paroi, les procédés de fabrication décrits dans les documents [1] et [2] s'avèrent toutefois relativement coûteux et de mise en oeuvre compliquée sur le plan industriel.

Le but de la présente invention est, par conséquent, de pallier les inconvénients des procédés de l'art antérieur et de proposer un procédé permettant de fabriquer un tube échangeur de chaleur à double paroi qui présente la double fonction d'étanchéité et de résistance à la pression, notamment en résistant à la propagation des défauts de fatigue, ainsi que de bonnes propriétés de conductivité thermique, ce procédé permettant d'atteindre une productivité et des coûts de mise en oeuvre industrielle avantageux par rapport aux procédés décrits dans les documents [1] et [2].

## EXPOSÉ DE L'INVENTION

Les buts précédemment énoncés ainsi que d'autres sont atteints par un procédé de fabrication d'un tube échangeur de chaleur à double paroi du type précité, c'est-à-dire comprenant un tube externe et un tube interne, les tubes externe et interne étant métalliques, cylindriques et coaxiaux.

Selon l'invention, le procédé de fabrication comprend les étapes (i) à (vii) successives suivantes :

(i) la fourniture :

- d'un premier tube présentant un diamètre interne $d_{1int}$ et un diamètre externe $d_{1ext}$, ce premier tube étant destiné à former le tube externe,
- d'un second tube présentant un diamètre interne $d_{2int}$ et un diamètre externe $d_{2ext}$, ce second tube étant destiné à former le tube interne, et
- d'un feuillard tubulaire cylindrique et coaxial en $Fe^0$ présentant un diamètre interne $d_{int}$ et un diamètre externe $d_{ext}$,

tels que

$$0,15 \text{ mm} \le (d_{1int} - d_{ext}) \le 0,25 \text{ mm},$$

$$0,15 \text{ mm} \le (d_{int} - d_{2ext}) \le 0,25 \text{ mm},$$

et

$$10 \text{ µm} \le (d_{ext} - d_{int}) \le 200 \text{ µm} ;$$

(ii) l'assemblage co-axial du second tube et du feuillard à l'intérieur du premier tube, le feuillard étant positionné entre les premier et second tubes ;
(iii) le brasage ou le collage d'une extrémité de l'assemblage obtenu à l'issue de l'étape (ii) ;
(iv) la co-déformation de l'assemblage obtenu à l'issue de l'étape (iii) ;
(v) le tronçonnage des extrémités de l'assemblage co-déformé à l'issue de l'étape (iv) ;
(vi) le soudage des extrémités tronçonnées de l'assemblage obtenu à l'issue de l'étape (v) ; et
(vii) le traitement thermique de l'assemblage obtenu à l'issue de l'étape (vi), ce traitement thermique étant réalisé par compression isostatique à chaud, moyennant quoi on obtient le tube échangeur de chaleur à double paroi.

Le procédé selon l'invention permet de former, entre les tubes externe et interne, une interphase métallique dense en fer pur qui comble tout le volume initial de l'interstice existant entre les premier et second tubes et permet ainsi d'assurer une jonction mécanique uniforme entre les tubes externe et interne. L'absence de jeu mécanique entre les tubes externe et interne permet d'éviter le mouvement de ces deux tubes l'un par rapport à l'autre : ces deux tubes ne formant en quelque sorte plus qu'un seul tube, ils se déforment alors de la même manière qu'un tube monolithique lors d'une sollicitation mécanique. Grâce au procédé de fabrication selon l'invention, on obtient un tube échangeur de chaleur à double paroi présentant une qualité géométrique particulièrement performante.

Cette interphase métallique en fer pur permet également de conférer au tube échangeur de chaleur à double paroi d'excellentes propriétés de conductivité thermique en assurant un très bon transfert thermique entre les tubes externe et interne, ce qui a pour effet d'augmenter le rendement d'un échangeur thermique équipé d'un tel échangeur de chaleur à double paroi. De manière inattendue et surprenante, l'Inventeur a constaté que cette interphase ductile et dense en fer $Fe^0$ assure une excellente conductivité thermique qui tend à une valeur proche de celle d'une paroi équivalente massive.

Cette ductilité de l'interphase métallique en fer permet également de dévier et/ou d'arrêter la propagation de fissures de fatigue, en particulier de fatigue à grand nombre de cycles, qui se seraient formées et propagées au sein de l'un des deux tubes, préservant ainsi l'intégrité de l'autre tube. En particulier, lorsque les fissures de fatigue sont déviées, elles se propagent dans l'interphase métallique ductile offrant ainsi une durée de vie prolongée de 30 % à température ambiante.

Cette interphase en fer se caractérise, en outre, par une étanchéité lui permettant d'éviter la propagation capillaire de fluide provenant d'une telle fissure entre les deux tubes et, partant, de réduire drastiquement les risques de contact entre les premier et second fluides de l'échangeur de chaleur, ce qui est fondamental, en particulier lorsque les premier et second fluides sont réactifs, lorsqu'il y a un risque de contamination ou encore lorsque les tubes non sont pas contrôlables en service.

De plus, le procédé selon l'invention ne met en oeuvre aucune étape exposant les éléments constitutifs du tube à double paroi à l'hydrogène, contrairement au dépôt électrolytique qui est mis en oeuvre dans le procédé du document [2] et qui, lorsque l'exposition à l'hydrogène n'est pas maîtrisée, peut fragiliser le matériau métallique formant les éléments constitutifs du tube, notamment lorsque ce matériau est de l'acier.

Le procédé selon l'invention permet de fabriquer un tube échangeur de chaleur à double paroi qui présente un diamètre interne $d_{INT}$ et un diamètre externe $d_{EXT}$.

Selon un mode de réalisation, le diamètre interne $d_{INT}$ du tube à double paroi est compris entre 6 mm et 30 mm et, avantageusement, entre 8 mm et 15 mm.

Selon un mode de réalisation, le diamètre externe $d_{EXT}$ du tube à double paroi est compris entre 6 mm et 30 mm et, avantageusement, entre 10 mm et 20 mm.

Il est précisé que l'expression "compris entre ... et ..." qui est utilisée ci-dessus mais également dans la suite de la présente description pour définir un intervalle, doit être comprise comme définissant non seulement les valeurs de l'intervalle, mais également les valeurs des bornes de cet intervalle.

Le procédé selon l'invention comprend les étapes (i) à (vii) mentionnées ci-dessus et détaillées ci-après.

Lors de l'étape (i) du procédé de fabrication selon l'invention, on fournit deux tubes, un premier tube qui est destiné à former le tube externe du tube échangeur de chaleur à double paroi, et un second tube qui est destiné à former le tube interne de ce tube échangeur de chaleur à double paroi.

Le premier tube présente un diamètre interne $d_{1int}$ et un diamètre externe $d_{1ext}$, et le second tube présente un diamètre interne $d_{2int}$ et un diamètre externe $d_{2ext}$.

On fournit également un feuillard tubulaire cylindrique et coaxial qui est constitué de fer au degré d'oxydation 0, c'est-à-dire de fer pur $Fe^0$. Ce feuillard en $Fe^0$ présente un diamètre interne $d_{int}$ et un diamètre externe $d_{ext}$.

Les premier et second tubes ainsi que le feuillard sont tels que :

$$0,15 \text{ mm} \leq (d_{1int} - d_{ext}) \leq 0,25 \text{ mm},$$

$$0,15 \text{ mm} \leq (d_{int} - d_{2ext}) \leq 0,25 \text{ mm},$$

et

$$10 \text{ } \mu m \leq (d_{ext} - d_{int}) \leq 200 \mu m.$$

En d'autres termes, le feuillard présente une épaisseur comprise entre 80 $\mu m$ et 200 $\mu m$.

Dans un mode de réalisation avantageux, le feuillard présente une épaisseur comprise entre 80 $\mu m$ et 150 $\mu m$.

Dans une variante avantageuse du procédé selon l'invention, au moins l'un des éléments choisis parmi le premier tube, le second tube et le feuillard tubulaire est dépourvu de soudure.

Dans une variante préférée du procédé selon l'invention, le premier tube, le second tube ainsi que le feuillard tubulaire sont tous dépourvus de soudure. Ce faisant, la fiabilité en termes d'étanchéité et de sécurité est maximisée.

Les premier et second tubes, qu'ils soient ou non dépourvus de soudure, peuvent être élaborés par tout procédé industriel conventionnel.

Selon un mode de réalisation avantageux, les premier et second tubes sont obtenus par la mise en œuvre, préalablement à l'étape (i), des étapes ($i_0$) et ($i_1$) successives suivantes :

($i_0$) le filage à chaud ou le laminage à chaud d'une tige percée (également appelée billette), moyennant quoi on obtient une ébauche tubulaire, et

($i_1$) l'étirage à froid ou le laminage à pas de pèlerin de l'ébauche tubulaire telle qu'obtenue à l'issue de l'étape ($i_0$).

La mise en œuvre de ces étapes ($i_0$) et ($i_1$) permet d'obtenir des tubes sans soudure qui peuvent atteindre des longueurs allant jusqu'à 6 m.

Selon un mode de réalisation avantageux, le feuillard tubulaire sans soudure est obtenu par la mise en œuvre, préalablement à l'étape (i), des étapes (i$_2$) à (i$_4$) successives suivantes :

(i$_2$) le forage d'une tige en fer Fe$^0$,

(i$_3$) le tournage de la tige percée telle qu'obtenue à l'issue de l'étape (i$_2$), moyennant quoi on obtient une ébauche tubulaire, et

(i$_4$) le laminage à pas de pèlerin de l'ébauche tubulaire telle qu'obtenue à l'issue de l'étape (i$_3$).

Dans une variante, qui sera illustrée dans l'exemple décrit ci-après, l'étape (i$_4$) de laminage à pas de pèlerin peut être reproduite au moins une fois. Le procédé selon l'invention peut, en outre, comprendre une étape (i$_4$') de traitement thermique conduite de préférence entre chaque étape (i$_4$) et, par exemple, à 850 °C pendant 1 h.

Selon un mode de réalisation avantageux, le procédé selon l'invention comprend, en outre, une étape de nettoyage d'au moins la surface interne du premier tube, les surfaces interne et externe du feuillard tubulaire et la surface externe du deuxième tube, cette étape de nettoyage étant mise en œuvre préalablement à l'étape (ii) d'assemblage co-axial.

Cette étape de nettoyage permet d'optimiser le contact ultérieur entre le feuillard tubulaire et les surfaces des tubes externe et interne avec lesquelles ce feuillard va être en contact et, ce faisant, améliorer l'étanchéité et la conductivité thermique du tube échangeur de chaleur à double paroi.

Le procédé de fabrication selon l'invention comprend, après l'étape (i), une étape (ii) d'assemblage co-axial des premier et second tubes et du feuillard tubulaire de fer Fe$^0$. Plus particulièrement, dans cette étape (ii), le second tube et le feuillard sont introduits à l'intérieur du premier tube, le feuillard étant disposé entre les premier et second tubes.

En d'autres termes, à l'issue de l'étape (ii), on obtient un assemblage dans lequel le feuillard tubulaire de fer Fe$^0$ est positionné entre les premier et second tubes.

Le procédé de fabrication selon l'invention comprend, après l'étape (ii) d'assemblage co-axial, une étape (iii) de brasage ou de collage d'une extrémité de l'assemblage obtenu à l'issue de l'étape (ii).

Cette étape (iii) de brasage permet de maintenir l'assemblage pour la mise en oeuvre des étapes suivantes du procédé selon l'invention, en particulier de son étape (iv) de co-déformation, mais également de protéger le feuillard tubulaire de toute souillure, notamment de celle générée par les lubrifiants qui sont utilisés lors de cette étape ultérieure (iv) de co-déformation.

La brasure doit avantageusement disposer d'une ductilité suffisante pour pouvoir être co-déformée avec les tubes et le feuillard tubulaire lors de l'étape (iv).

Dans un mode de réalisation particulier impliquant des premier et second tubes en acier inoxydable, l'étape (iii) de brasage est réalisée avec de la brasure à forte teneur en argent.

Le procédé de fabrication selon l'invention comprend, après l'étape (iii) de brasage, une étape (iv) de co-déformation de l'assemblage obtenu à l'issue de l'étape (iii).

Cette étape (iv) de co-déformation permet de réduire le volume du jeu mécanique existant entre le premier tube et le feuillard, d'une part, ainsi qu'entre le second tube et le feuillard, d'autre part, ce qui favorise l'allongement homogène des tubes et du feuillard, la conservation de la géométrie de l'assemblage de ces éléments lors des opérations ultérieures, en garantissant l'absence de plissage du feuillard durant la déformation.

Cette étape (iv) de co-déformation peut, en particulier, être mise en oeuvre par co-étirage ou par co-laminage.

Dans une variante avantageuse du procédé selon l'invention, cette étape (iv) de co-déformation est réalisée par co-laminage à pas de pèlerin de l'assemblage obtenu à l'issue de l'étape (iii).

Le choix d'une telle étape (iv) de co-laminage à pas de pèlerin présente l'avantage de réduire le volume du jeu mécanique entre les premier et second tubes et le feuillard tubulaire. Ce faisant, la quantité de gaz contenue dans l'assemblage devient négligeable et aucune étape de dégazage n'est nécessaire avant la mise en oeuvre des étapes suivantes, en particulier de l'étape (vi) de soudage.

Dans un mode de réalisation, le procédé de fabrication selon l'invention ne comprend pas d'étape de dégazage entre l'étape (iv) de co-déformation et l'étape (vi) de soudage.

La suppression d'une telle étape de dégazage, qui est particulièrement complexe à mettre en œuvre sur le plan industriel dans le cadre de la fabrication de tubes à double paroi, participe à une réduction significative des temps de cycles, des coûts et des délais de production.

Le procédé de fabrication selon l'invention comprend, à l'issue de l'étape (iv) de co-déformation, une étape (v) de tronçonnage des extrémités de l'assemblage co-déformé, de manière à éliminer les extrémités de l'assemblage affectées, pour l'une, par la brasure et, pour l'autre, par la percolation de fluides de lubrification.

Ces extrémités tronçonnées à l'étape (v) sont alors soumises à une étape (vi) de soudage.

Cette étape (vi) de soudage des deux extrémités de l'assemblage permet d'isoler de l'environnement les interfaces du feuillard tubulaire avec les premier et second tubes.

Dans un mode de réalisation, l'étape (vi) de soudage est réalisée par un procédé de soudage à l'arc avec une électrode non fusible, par exemple en tungstène, et sans apport de matière. Ce soudage peut avantageusement être mis en oeuvre sous gaz neutre.

Le procédé de fabrication selon l'invention comprend, après l'étape (vi) de soudage, une étape (vii) de traitement thermique de l'assemblage obtenu à l'issue de l'étape (vi).

Cette étape (vii) de traitement thermique de l'assemblage obtenu à l'issue de l'étape (vi), est réalisée par compression isostatique à chaud (CIC), moyennant quoi on obtient le tube échangeur de chaleur à double paroi.

Cette étape (vii) de compression isostatique à chaud permet de souder, par diffusion, d'une part, la surface interne du premier tube à la surface externe du feuillard tubulaire et, d'autre part, la surface externe du second tube à la surface interne du feuillard tubulaire. À l'issue de l'étape (vii) de compression isostatique à chaud, on obtient une jonction mécanique uniforme entre les premier et second tubes, qui est formée par une interphase en fer pur provenant du feuillard tubulaire. La présence d'une faible quantité d'oxygène piégé dans les rugosités d'interfaces du feuillard et des tubes (absence de dégazage) contribue à la formation d'oxydes mixtes de fer et de chrome (dans le cas de tubes en acier), ces oxydes jouant un rôle favorable de délaminage des surfaces lors de la propagation d'une fissure de fatigue.

Cette étape (vii) de compression isostatique à chaud, qui n'engendre pas ou peu de déformation des premier et second tubes et du feuillard tubulaire, permet d'optimiser la conservation de la géométrie de l'assemblage formé par ces tubes et feuillard et, par conséquent, de respecter les tolérances géométriques des tubes finis, ce qui permet d'assurer une reproductibilité, et donc une fiabilité, des tubes échangeurs de chaleur à double paroi fabriqués par le procédé selon l'invention.

Dans un mode de réalisation particulier, l'étape (vii) est conduite à une température comprise entre 800 °C et 1200 °C, à une pression comprise entre 50 MPa et 200 MPa et pendant une durée comprise entre 30 min et 4 h.

Dans un mode de réalisation avantageux, l'étape (vii) est conduite à une température comprise entre 1000 °C et 1200 °C, à une pression comprise entre 100 MPa et 200 MPa et pendant une durée comprise entre 30 min et 2 h.

Le procédé selon l'invention permet de fabriquer des tubes échangeurs de chaleur à double paroi de longueurs et de géométries variables.

Les matériaux du premier tube et du second tube peuvent être identiques ou différents, et peuvent notamment comprendre du fer.

Dans une variante avantageuse, les premier et second tubes sont réalisés en un matériau comprenant du fer, notamment en acier inoxydable. Cet acier inoxydable peut avantageusement être un acier martensitique, avantageusement de l'Eurofer-97 ou de l'acier T-91.

Dans une variante préférée, les matériaux des premier et second tubes sont identiques.

Dans un mode de réalisation, le procédé de fabrication selon l'invention comprend, en outre, après l'étape (vii) de traitement thermique, l'une ou plusieurs des étapes (viii) à (xii) suivantes :

(viii) le refroidissement du tube échangeur de chaleur à double paroi, par exemple à une vitesse de 50 °C/h ;
(ix) le cintrage du tube échangeur de chaleur à double paroi obtenu à l'issue de l'étape (viii) ;
(x) le dudgeonnage du tube échangeur de chaleur à double paroi obtenu à l'issue de l'étape (viii) ou (ix) ;
(xi) le traitement thermique du tube échangeur de chaleur à double paroi obtenu à l'issue de l'étape (ix) ou (x), tel qu'une trempe ou un revenu normalisé ; et
(xii) le redressage du tube échangeur de chaleur à double paroi obtenu à l'issue de l'étape (ix), (x) ou (xi).

En particulier, et nomment lorsque les premier et second tubes sont en acier inoxydable et, plus particulièrement en Eurofer-97, une étape (viii) de refroidissement permet de maintenir le tube à double paroi dans un état propre à permettre le cintrage et/ou le dudgeonnage du tube.

Les tubes à double paroi fabriqués par le procédé selon l'invention peuvent être cintrés et assemblés comme les tubes conventionnels.

Il est à noter que le choix de fer pur pour le feuillard tubulaire et, partant, pour l'interphase du tube à double paroi ne modifie pas la composition du bain de fusion lors d'un assemblage par soudage de tels tubes. On peut donc envisager d'assembler les tubes en pleine épaisseur sans modifier significativement la composition du cordon de soudure du fait de la présence de l'interphase en fer.

Il en serait tout à fait autrement avec une interphase en cuivre, chrome, nickel ou vanadium comme décrit dans le document [2] qui impose un changement significatif de la composition du cordon de soudure, avec le risque possible de modifier les propriétés mécaniques du cordon de soudure d'un tel tube.

Le procédé selon l'invention favorise donc grandement la fabrication industrielle des tubes échangeurs de chaleur à double paroi, en évitant de pratiquer des zones dépourvues d'interphase, également appelées réserves, localisées au niveau des futures soudures.

De manière générale, l'étape (xi) de traitement thermique a pour but de conférer les propriétés mécaniques attendues pour le tube à double paroi fabriqué par le procédé selon l'invention.

Ce traitement thermique (xi) peut, par exemple, être choisi parmi une trempe, un revenu normalisé et un recuit, voire être une combinaison de ceux-ci (trempe suivie de revenu normalisé), ce traitement étant adapté aux spécifications du ou des matériaux formant le ou les premier et second tubes.

Par ailleurs, en raison du changement de phase(s) pouvant survenir lors de l'étape (xi) de traitement thermique, une distorsion géométrique du tube échangeur de chaleur à double paroi est possible. Une étape (xii) de redressage peut alors être envisagée pour assurer la conformité géométrique de ce tube échangeur de chaleur à double paroi.

D'autres caractéristiques et avantages de l'invention apparaîtront à la lecture de l'exemple qui suit et qui se rapporte à la fabrication d'un tube échangeur de chaleur à double paroi.

Il est précisé que cet exemple n'est donné qu'à titre d'illustration de l'objet de l'invention et ne constitue en aucun cas une limitation de cet objet.

## EXPOSÉ DÉTAILLÉ D'UN MODE DE RÉALISATION PARTICULIER

Un tube échangeur de chaleur à double paroi a été fabriqué par le procédé selon l'invention.

### Élaboration des tubes et feuillard

Les premier et second tubes destinés à former respectivement le tube externe et le tube interne du tube échangeur de chaleur à double paroi ont été réalisés en acier inoxydable Eurofer-97 dont la composition (en pourcentage massique) est précisée dans le Tableau 1 ci-dessous.

Tableau 1

| V | Cr | Mn | Ta | W | C | N | Fe |
|---|----|----|----|----|----|----|----|
| 0,2 | 9 | 0,4 | 0,075 | 1,1 | 0,11 | 0,03 | le reste |

Ces premier et second tubes sont des tubes cylindriques sans soudure qui ont été élaborés par un procédé industriel classique à partir d'une ébauche en acier Eurofer-97 qui a été étirée de telle sorte à obtenir des tubes d'une longueur de 2,5 m et :

- pour le premier tube, une épaisseur de 1,45 mm et des diamètres externe et interne respectifs de 14,00 mm ($d_{1ext}$) et de 11,12 mm ($d_{1int}$), et
- pour le second tube, une épaisseur de 1,20 mm et des diamètres externe et interne respectifs de 10,62 mm ($d_{2ext}$) et de 8,2 mm ($d_{2int}$).

Le feuillard tubulaire cylindrique en fer pur a été préparé à partir d'un fer pur commercialisé par la société Liffs sous la dénomination ARMCO® Pure Iron de grade 4.

Des ébauches tubulaires de 500 mm de longueur et de diamètres extérieur et intérieur respectifs de 16,22 mm et 12,57 mm ont tout d'abord été usinées par forage puis par tournage avant d'être laminées.

Les ébauches tubulaires ont ensuite été soumises à un premier laminage à pas de pèlerin, suivi d'un premier traitement thermique à 850 °C pendant 1 h, puis à un deuxième laminage à pas de pèlerin suivi d'un deuxième traitement thermique à 850 °C pendant 1 h, puis à un troisième laminage à pas de pèlerin suivi d'un troisième traitement thermique à 850 °C pendant 1 h et, enfin, à un quatrième et dernier laminage à pas de pèlerin.

À l'issue de ces étapes de laminage entrecoupées d'étapes de traitement thermique, on a obtenu le feuillard tubulaire sans soudure présentant une épaisseur de 100 $\mu$m et des diamètres externe et interne respectifs de 10,97 mm ($d_{ext}$) et de 10,77 mm ($d_{int}$).

### Préparation des surfaces

La surface interne du premier tube destiné à former le tube externe a été nettoyée au moyen d'un sablage au corindon de manière à ne pas affecter le diamètre interne $d_{1int}$ de plus de 50 $\mu$m.

La surface externe du second tube destiné à former le tube interne a été brossée au moyen d'une brosse abrasive du type Scotch-Brite™ de manière à ne pas affecter le diamètre extérieur $d_{2ext}$ de plus de 50 $\mu$m.

Les surfaces interne et externe des premier et second tubes ainsi que les surfaces interne et externe du feuillard tubulaire en fer pur ont été soigneusement nettoyées au chiffon puis à l'acétone.

Assemblage des tubes et feuillard

On a ensuite procédé à l'assemblage co-axial du second tube et du feuillard tubulaire à l'intérieur du premier tube, le feuillard tubulaire étant positionné entre les premier et second tubes.

Compte tenu des diamètres externe et interne respectifs des premier et second tubes et du feuillard tubulaire tels qu'obtenus après la préparation des différentes surfaces, un jeu technique d'au moins 150 °um existe entre le feuillard et le premier tube, d'une part, et entre le feuillard et le second tube d'autre part, ce qui facilite bien évidemment l'assemblage de ces trois éléments.

Brasage de l'assemblage

Le second tube intérieur a été positionné de manière à dépasser du premier tube de plusieurs centimètres. Les premier et second tubes ont alors été chauffés au chalumeau oxyacétylénique avant de procéder au dépôt d'une brasure à l'argent entre les deux tubes. Il est précisé que la brasure en argent a une teneur qui est compatible avec l'acier des premier et second tubes qui comprend 9 % en masse de chrome. La brasure percole dans le jeu de montage entre les tubes sur l'étendue de la zone chauffée par le chalumeau. Il est à noter que cette brasure se caractérise par une ductilité suffisante pour être co-déformée avec les tubes et le feuillard lors de l'étape suivante de co-déformation.

Un refroidissement par palier a ensuite été effectué afin de ne pas générer une structure martensitique fragile.

Co-déformation de l'assemblage

L'assemblage a ensuite été soumis à un laminage à pas de pèlerin.

Le Tableau 2 ci-dessous fait état des diamètres externe et interne (notés $d_{externe}$, $d_{interne}$ et exprimés en mm) des premiers et second tubes et du feuillard tubulaire avant et après cette étape de co-déformation par laminage à pas de pèlerin de l'assemblage.

Tableau 2

| | Avant co-déformation | | Après co-déformation | |
|---|---|---|---|---|
| | $d_{externe}$ | $d_{interne}$ | $d_{externe}$ | $d_{interne}$ |
| Premier tube | 14,00 | 11,12 | 13,50 | 10,60 |
| Feuillard | 10,97 | 10,77 | 10,60 | 10,40 |
| Second tube | 10,62 | 8,20 | 10,40 | 8,00 |

Tronçonnage et soudage

Les extrémités de l'assemblage tel qu'obtenu à l'issue de l'étape de co-déformation ont été tronçonnées pour éliminer l'extrémité affectée thermiquement par la brasure ainsi que l'extrémité opposée possiblement affectée par la percolation du fluide de lubrification.

L'assemblage a ensuite été découpé en tronçons présentant une longueur compatible avec l'enceinte dans laquelle a ensuite été réalisée l'étape de compression isostatique à chaud (CIC).

Les tronçons ont alors été soudés par un procédé de soudage par électrode au tungstène sans apport de matière et sous gaz neutre. Cette étape de soudage est effectuée sans dégazage préalable, le jeu technique entre les tubes et le feuillard étant très faible après l'étape de co-déformation.

Traitement thermique par compression isostatique à chaud (CIC)

Les tronçons ont alors été placés dans une enceinte pour y subir un cycle de compression isostatique à chaud conduite à une température de 1100 °C, à une pression de 1200 bar (120 MPa), pendant 1 h.

Traitements complémentaires

Après l'étape de CIC, les tronçons de tube à double paroi tels qu'obtenus ont été refroidis à un rythme de 50 °C/h, conférant un état métallurgique ferritique (pas de martensite) leur permettant de pouvoir être cintrés comme des tubes conventionnels.

Ces tubes ainsi mis en forme et soudés ont ensuite été traités thermiquement par trempe et revenu.

Les tronçons de tube à double paroi ainsi fabriqués par le procédé selon l'invention présentaient un diamètre extérieur de 13,50 mm (± 0,25 mm) et une épaisseur de 2,75 mm (± 0,35 mm).

Le tube à double paroi ainsi fabriqué permet de contenir de l'eau pressurisée à une température moyenne de 325 °C, étant précisé que chacun des premiers et second tubes peut, à lui seul, supporter les efforts liés à la pression de l'eau.

**BIBLIOGRAPHIE**

[1]    CN 203928838
[2]    CN 113458737

**Revendications**

1. Procédé de fabrication d'un tube échangeur de chaleur à double paroi comprenant un tube externe et un tube interne, les tubes externe et interne étant métalliques, cylindriques et coaxiaux, ledit procédé de fabrication étant **caractérisé en ce qu'**il comprend les étapes (i) à (vii) successives suivantes :

   (i) la fourniture :

   . d'un premier tube présentant un diamètre interne $d_{1int}$ et un diamètre externe $d_{1ext}$, ce premier tube étant destiné à former le tube externe,
   . d'un second tube présentant un diamètre interne $d_{2int}$ et un diamètre externe $d_{2ext}$, ce second tube étant destiné à former le tube interne, et
   . d'un feuillard tubulaire cylindrique et coaxial en $Fe^0$ présentant un diamètre interne $d_{int}$ et un diamètre externe $d_{ext}$,

   tels que

$$0{,}15 \text{ mm} \leq (d_{1int} - d_{ext}) \leq 0{,}25 \text{ mm},$$

$$0{,}15 \text{ mm} \leq (d_{int} - d_{2ext}) \leq 0{,}25 \text{ mm},$$

   et

$$10 \text{ µm} \leq (d_{ext} - d_{int}) \leq 200 \text{ µm} ;$$

   (ii) l'assemblage co-axial du second tube et du feuillard à l'intérieur du premier tube, le feuillard étant positionné entre les premier et second tubes ;
   (iii) le brasage ou le collage d'une extrémité de l'assemblage obtenu à l'issue de l'étape (ii) ;
   (iv) la co-déformation de l'assemblage obtenu à l'issue de l'étape (iii) ;
   (v) le tronçonnage des extrémités de l'assemblage co-déformé obtenu à l'issue de l'étape (iv) ;
   (vi) le soudage des extrémités tronçonnées de l'assemblage obtenu à l'issue de l'étape (v) ; et
   (vii) le traitement thermique de l'assemblage obtenu à l'issue de l'étape (vi), ce traitement thermique étant réalisé par compression isostatique à chaud, moyennant quoi on obtient le tube échangeur de chaleur à double paroi.

2. Procédé selon la revendication 1, dans lequel les premier et second tubes fournis à l'étape (i) sont dépourvus de soudure, chacun de ces premier et second tubes ayant été avantageusement obtenu par la mise en oeuvre, préalablement à l'étape (i), des étapes $(i_0)$ et $(i_1)$ successives suivantes :

   $(i_0)$ le filage à chaud ou le laminage à chaud d'une tige percée, moyennant quoi on obtient une ébauche tubulaire, et
   $(i_1)$ l'étirage à froid ou le laminage à pas de pèlerin de l'ébauche tubulaire telle qu'obtenue à l'issue de l'étape $(i_0)$.

3. Procédé selon la revendication 1 ou 2, dans lequel le feuillard tubulaire fourni à l'étape (i) est dépourvu de soudure et est avantageusement obtenu par la mise en oeuvre, préalablement à l'étape (i), des étapes $(i_2)$ à $(i_4)$ successives

suivantes :

($i_2$) le forage d'une tige en fer $Fe^0$,
($i_3$) le tournage de la tige percée telle qu'obtenue à l'issue de l'étape ($i_2$), moyennant quoi on obtient une ébauche tubulaire, et
($i_4$) le laminage à pas de pèlerin de l'ébauche tubulaire telle qu'obtenue à l'issue de l'étape ($i_3$).

4. Procédé selon la revendication 3, dans lequel l'étape ($i_4$) de laminage à pas de pèlerin est reproduite au moins une fois, le procédé pouvant, en outre, comprendre une étape ($i_4$') de traitement thermique conduite de préférence entre chaque étape ($i_4$) et, par exemple, à 850 °C pendant 1 h.

5. Procédé selon l'une quelconque des revendications 1 à 4, comprenant, en outre, une étape de nettoyage d'au moins la surface interne du premier tube, les surfaces interne et externe du feuillard tubulaire et la surface externe du deuxième tube, cette étape de nettoyage étant mise en oeuvre préalablement à l'étape (ii) d'assemblage co-axial.

6. Procédé selon l'une quelconque des revendications 1 à 5, dans lequel l'étape (iv) de co-déformation est réalisée par co-étirage ou par co-laminage et, de préférence, par co-laminage à pas de pèlerin, de l'assemblage obtenu à l'issue de l'étape (iii).

7. Procédé selon l'une quelconque des revendications 1 à 6, lequel ne comprend pas d'étape de dégazage entre l'étape (iv) de co-déformation et l'étape (vi) de soudage.

8. Procédé selon l'une quelconque des revendications 1 à 7, dans lequel l'étape (vi) de soudage est réalisée par un procédé de soudage à l'arc avec une électrode non fusible, par exemple en tungstène, et sans apport de matière.

9. Procédé selon l'une quelconque des revendications 1 à 8, dans lequel l'étape (vii) est conduite à une température comprise entre 800 °C et 1200 °C, à une pression comprise entre 50 MPa et 200 MPa et pendant une durée comprise entre 30 min et 4 h.

10. Procédé selon l'une quelconque des revendications 1 à 9, comprenant, en outre, après l'étape (vii), l'une ou plusieurs des étapes (viii) à (xii) suivantes :

(viii) le refroidissement du tube échangeur de chaleur à double paroi, par exemple à une vitesse de 50 °C/h ;
(ix) le cintrage du tube échangeur de chaleur à double paroi obtenu à l'issue de l'étape (viii) ;
(x) le dudgeonnage du tube échangeur de chaleur à double paroi obtenu à l'issue de l'étape (viii) ou (ix) ;
(xi) le traitement thermique du tube échangeur de chaleur à double paroi obtenu à l'issue de l'étape (ix) ou (x), tel qu'une trempe ou un revenu normalisé ; et
(xii) le redressage du tube échangeur de chaleur à double paroi obtenu à l'issue de l'étape (ix), (x) ou (xi).

11. Procédé selon l'une quelconque des revendications 1 à 10, dans lequel les premier et second tubes sont en acier inoxydable martensitique, avantageusement en Eurofer-97 ou en acier T-91.

12. Procédé selon l'une quelconque des revendications 1 à 11, dans lequel les matériaux des premier et second tubes sont identiques.

**Patentansprüche**

1. Verfahren zur Herstellung eines doppelwandigen Wärmetauscherrohrs, das ein Außenrohr und ein Innenrohr umfasst, wobei die Außen- und Innenrohre metallisch, zylindrisch und koaxial sind, wobei das Herstellungsverfahren **dadurch gekennzeichnet ist, dass** es die folgenden aufeinanderfolgenden Schritte (i) bis (vii) umfasst:

(i) Bereitstellen:

■ eines ersten Rohrs mit einem Innendurchmesser $d_{1int}$ und einem Außendurchmesser $d_{1ext}$, wobei dieses erste Rohr dazu bestimmt ist, das Außenrohr zu bilden,
■ eines zweiten Rohrs mit einem Innendurchmesser $d_{2int}$ und einem Außendurchmesser $d_{2ext}$, wobei dieses zweite Rohr dazu bestimmt ist, das Innenrohr zu bilden, und

- ein zylindrisches und koaxiales Rohrband aus $Fe^0$, das einen Innendurchmesser $d_{int}$ und einen Außen-durchmesser $d_{ext}$ aufweist,

darunter

$$0{,}15 \text{ mm} \leq (d_{1int} - d_{ext}) \leq 0{,}25 \text{ mm},$$

$$0{,}15 \text{ mm} \leq (d_{int} - d_{2ext}) \leq 0{,}25 \text{ mm},$$

und

$$10 \text{ µm} \leq (d_{ext} - d_{int}) \leq 200 \text{ µm};$$

(ii) koaxiales Verbinden des zweiten Rohrs und des Bandes im Inneren des ersten Rohrs, wobei das Band zwischen dem ersten und dem zweiten Rohr positioniert ist;
(iii) Löten oder Kleben eines Endes der nach Schritt (ii) erhaltenen Verbindung;
(iv) Co-Verformen der nach Schritt (iii) erhaltenen Verbindung;
(v) Abschneiden der Enden der co-verformten Verbindung, die nach Schritt (iv) erhalten wurde;
(vi) Verschweißen der abgeschnittenen Enden der Verbindung, die nach Schritt (v) erhalten wurde; und
(vii) Wärmebehandeln der Verbindung, die nach Schritt (vi) erhalten wurde, wobei diese Wärmebehandlung durch isostatische Warmkompression erfolgt, wodurch das doppelwandige Wärmetauscherrohr entsteht.

2. Verfahren nach Anspruch 1, wobei das erste und das zweite Rohr, die in Schritt (i) bereitgestellt werden, keine Schweißnaht besitzen, wobei jedes dieser ersten und zweiten Rohre vorteilhafterweise dadurch erhalten wurde, dass vor Schritt (i) die folgenden aufeinanderfolgenden Schritte $(i_0)$ und $(i_1)$ durchgeführt wurden:

$(i_0)$ Warmfließpressen oder Warmwalzen eines durchbohrten Stabs, wodurch ein rohrförmiger Rohkörper erhalten wird, und
$(i_1)$ Kaltziehen oder Pilgerwalzen des rohrförmigen Rohkörpers, wie er nach Schritt $(i_0)$ erhalten wurde.

3. Verfahren nach Anspruch 1 oder 2, wobei das in Schritt (i) bereitgestellte Rohrband keine Schweißnaht aufweist und vorteilhafterweise dadurch erhalten wird, dass vor Schritt (i) die folgenden aufeinanderfolgenden Schritte $(i_2)$ bis $(i_4)$ durchgeführt werden:

$(i_2)$ Bohren eines Eisenstabs $Fe^0$,
$(i_3)$ Drehen des durchbohrten Stabs, wie er nach Schritt $(i_2)$ erhalten wurde, wodurch ein rohrförmiger Rohkörper erhalten wird, und
$(i_4)$ Pilgerwalzen des rohrförmigen Rohkörpers, wie er nach Schritt $(i_3)$ erhalten wurde.

4. Verfahren nach Anspruch 3, wobei der Schritt $(i_4)$ des Pilgerwalzens mindestens einmal reproduziert wird, wobei das Verfahren ferner einen Schritt $(i_4')$ des Wärmebehandelns umfassen kann, der vorzugsweise zwischen jedem Schritt $(i_4)$ und beispielsweise bei 850 °C für 1 h durchgeführt wird.

5. Verfahren nach einem der Ansprüche 1 bis 4, das ferner einen Schritt des Reinigens mindestens der Innenfläche des ersten Rohrs, der Innen- und Außenflächen des Rohrbands und der Außenfläche des zweiten Rohrs umfasst, wobei dieser Reinigungsschritt vor dem Schritt (ii) des koaxialen Verbindens durchgeführt wird.

6. Verfahren nach einem der Ansprüche 1 bis 5, wobei der Schritt (iv) des Co-Verformens durch Co-Dehnen oder Co-Walzen und, vorzugsweise, durch Co-Walzen im Pilgerschritt der Verbindung, die nach Schritt (iii) erhalten wurde, erfolgt.

7. Verfahren nach einem der Ansprüche 1 bis 6, das keinen Entgasungsschritt zwischen dem Schritt (iv) des Co-Verformens und dem Schritt (vi) des Schweißens umfasst.

8. Verfahren nach einem der Ansprüche 1 bis 7, wobei der Schweißschritt (vi) durch ein Lichtbogenschweißverfahren mit einer nicht schmelzbaren Elektrode, beispielsweise aus Wolfram, und ohne Materialzufuhr erfolgt.

9. Verfahren nach einem der Ansprüche 1 bis 8, wobei der Schritt (vii) bei einer Temperatur von 800 °C bis 1200 °C, einem Druck von 50 MPa bis 200 MPa und einer Dauer von 30 min bis 4 h ausgeführt wird.

10. Verfahren nach einem der Ansprüche 1 bis 9, das nach Schritt (vii) ferner einen oder mehrere der folgenden Schritte (viii) bis (xii) umfasst:

(viii) Kühlen des doppelwandigen Wärmetauscherrohrs, beispielsweise bei einer Geschwindigkeit von 50 °C/h
(ix) Biegen des doppelwandigen Wärmetauscherrohrs, das nach Schritt (viii) erhalten wurde;
(x) Einwalzen des doppelwandigen Wärmetauscherrohrs, das nach Schritt (viii) oder (ix) erhalten wurde;
(xi) Wärmebehandeln des doppelwandigen Wärmetauscherrohrs, das nach Schritt (ix) oder (x) erhalten wurde, wie beispielsweise normalisiertes Härten oder Anlassen; und
(xii) Richten des doppelwandigen Wärmetauscherrohrs, das nach Schritt (ix), (x) oder (xi) erhalten wurde.

11. Verfahren nach einem der Ansprüche 1 bis 10, wobei das erste und das zweite Rohr aus martensitischem Edelstahl bestehen, vorteilhafterweise aus Eurofer-97 oder T-91-Stahl.

12. Verfahren nach einem der Ansprüche 1 bis 11, wobei die Materialien des ersten und zweiten Blechs identisch sind.

**Claims**

1. Method for manufacturing a double-wall heat-exchanger tube comprising an external tube and an internal tube, the external and internal tubes being metallic, cylindrical and coaxial, said manufacturing method being **characterised in that** it comprises the following successive steps (i) to (vii):

(i) the provision:

of a first tube having an inside diameter $d_{1int}$ and an outside diameter $d_{1ext}$, this first tube being intended to form the external tube,
. of a second tube having an inside diameter $d_{2int}$ and an outside diameter $d_{2ext}$, this second tube being intended to form the internal tube, and
. of a cylindrical coaxial tubular leaf made from $Fe^0$ having an inside diameter $d_{int}$ and an outside diameter $d_{ext}$,

such that

$$0.15 \text{ mm} \leq (d_{1int} - d_{ext}) \leq 0.25 \text{ mm},$$

$$0.15 \text{ mm} \leq (d_{int} - d_{2ext}) \leq 0.25 \text{ mm},$$

and

$$10 \text{ μm} \leq (d_{ext} - d_{int}) \leq 200 \text{ μm};$$

(ii) the coaxial assembly of the second tube and of the leaf inside the first tube, the leaf being positioned between the first and second tubes;
(iii) the brazing or the bonding of one end of the assembly obtained at the end of step (ii);
(iv) the co-deformation of the assembly obtained at the end of step (iii):
(v) the cutting of the ends of the co-deformed assembly obtained at the end of step (iv);
(vi) the welding of the cut ends of the assembly obtained at the end of step (v); and
(vii) the heat treatment of the assembly obtained at the end of step (vi), this heat treatment being implemented by hot isostatic pressing, by means of which the double-wall heat-exchanger tube is obtained.

2. Method according to claim 1, wherein the first and second tubes provided at step (i) are devoid of welding, each of these first and second tubes advantageously having been obtained by implementing, prior to step (i), the following successive steps (i$_0$) and (i$_1$);

($i_0$) the hot spinning or the hot rolling of a pierced rod, by means of which a tubular blank is obtained, and

($i_1$) the cold drawing or the pilger rolling of the tubular blank as obtained at the end of step ($i_0$).

3. Method according to claim 1 or 2, wherein the tubular leaf provided at step (i) is devoid of welding and is advantageously obtained by implementing, prior to step (i), the following successive steps ($i_2$) to ($i_4$):

($i_2$) the drilling of a rod made from iron $Fe^0$,

($i_3$) the turning of the pierced rod as obtained at the end of step ($i_2$), by means of which a tubular blank is obtained, and

($i_4$) the pilger rolling of the tubular blank as obtained at the end of step ($i_3$).

4. Method according to claim 3, wherein step ($i_4$) of pilger rolling is reproduced at least once, the method being able to further comprise a heat treatment step ($i_4$') preferably conducted between each step ($i_4$) and, for example, at 850°C for 1 hour.

5. Method according to any one of claims 1 to 4, further comprising a step of cleaning at least the internal surface of the first tube, the internal and external surfaces of the tubular leaf and the external surface of the second tube, this cleaning step being implemented prior to the coaxial assembly step (ii).

6. Method according to any one of claims 1 to 5, wherein the co-deformation step (iv) is implemented by co-drawing or by co-rolling, and preferably by pilger co-rolling, of the assembly obtained at the end of step (iii).

7. Method according to any one of claims 1 to 6, which does not comprise a degassing step between the co-deformation step (iv) and the welding step (vi).

8. Method according to any one of claims 1 to 7, wherein the welding step (vi) is implemented by an arc welding method with a non-meltable electrode, for example made from tungsten, and without addition of material.

9. Method according to any one of claims 1 to 8, wherein step (vii) is implemented at a temperature of between 800°C and 1200°C, at a pressure of between 50 MPa and 200 MPa and for a period of between 30 minutes and 4 hours.

10. Method according to any one of claims 1 to 9, further comprising, after step (vii), one or more of the following steps (viii) to (xii):

(viii) cooling of the double-wall heat-exchanger tube, for example at a rate of 50°C/hour;

(ix) curving of the double-wall heat-exchanger tube obtained at the end of step (viii);

(x) expansion of the double-wall heat-exchanger tube obtained at the end of step (viii) or (ix);

(xi) heat treatment of the double-wall heat-exchanger tube obtained at the end of step (ix) or (x), such as quenching or normalised ageing; and

(xii) straightening of the double-wall heat-exchanger tube obtained at the end of step (ix), (x) or (xi).

11. Method according to any one of claims 1 to 10, wherein the first and second tubes are made from martensitic stainless steel, advantageously from Eurofer-97 or from T-91 steel.

12. Method according to any one of claims 1 to 11, wherein the materials of the first and second tubes are identical.

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- CN 203928838

- CN 113458737